(19) Europäisches Patentamt
European Patent Office
Office européen des brevets

(11) **EP 3 848 857 A1**

(12) **EUROPEAN PATENT APPLICATION**

(43) Date of publication:
**14.07.2021 Bulletin 2021/28**

(51) Int Cl.:
***G06N 3/04*** *(2006.01)*      ***G06N 3/08*** *(2006.01)*
***G06K 9/00*** *(2006.01)*      ***G06K 9/62*** *(2006.01)*

(21) Application number: **20216889.4**

(22) Date of filing: **23.12.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(30) Priority: **09.01.2020 CN 202010021676**

(71) Applicant: **FUJITSU LIMITED**
**Kanagawa 211-8588 (JP)**

(72) Inventors:
• **Sun, Li**
  **Beijing, 100027 (CN)**
• **Wang, Liuan**
  **Beijing, 100027 (CN)**
• **Sun, Jun**
  **Beijing, 100027 (CN)**

(74) Representative: **Hoffmann Eitle**
**Patent- und Rechtsanwälte PartmbB**
**Arabellastraße 30**
**81925 München (DE)**

(54) **NEURAL NETWORK ARCHITECTURE SEARCH SYSTEM AND METHOD, AND COMPUTER READABLE RECORDING MEDIUM**

(57)     A neural network architecture search system and method, and a computer readable recording medium are disclosed. The neural network architecture search system includes: a search space defining unit configured to define a search space as a set of architecture parameters describing a neural network architecture, wherein the neural network architecture includes a fixed primary processing portion, a freely searchable down-sampling portion and a freely searchable up-sampling portion; a control unit configured to sample, based on parameters of the control unit, the architecture parameters in the search space to generate child neural network architectures; a training unit configured to train the generated child neural network architectures using sample images to calculate losses of the generated child neural network architectures; and a reward feedback unit configured to evaluate a reward of the control unit based on the losses of the generated child neural network architectures, and adjust the parameters of the control unit to make the reward bigger, wherein processing in the above unit is iteratively performed until a predetermined iteration termination condition is met.

100

Search space defining unit 102

Control unit 104

Training unit 106

Reward feedback unit 108

Figure 1

**Description**

**FIELD**

The present disclosure relates to the field of information processing, and in particular, to a neural network architecture search system and method as well as a computer readable recording medium.

**BACKGROUND**

In the conventional art, the neural network is designed artificially, and thus, more resource or many professional engineers is required to complete the design for the neural network. As an example, a convolution neural network used for object detection in the conventional art is designed artificially, and thus, more resource or many professional engineers is required to complete the design for the convolution neural network.

**SUMMARY**

A brief summary of the present disclosure is given hereinafter, so as to provide basic understanding regarding some aspects of the present disclosure. However, it is to be understood that this summary is not an exhaustive overview of the present disclosure. It is not intended to determine key or important parts of the present disclosure, nor is it intended to limit the scope of the present disclosure. An object of the summary is only to provide some concepts on the present disclosure in a simplified form, as a preface of detailed description given later.

In view of the above problems, an object of the present disclosure is to provide a neural network architecture search system and method capable of solving one or more disadvantages in the conventional art.

According to an aspect of the present disclosure, a neural network architecture search system is provided. The neural network architecture search system includes: a search space defining unit which may be configured to define a search space as a set of architecture parameters describing a neural network architecture, wherein the neural network architecture includes a fixed primary processing portion, a freely searchable down-sampling portion and a freely searchable up-sampling portion; a control unit which may be configured to sample, based on parameters of the control unit, the architecture parameters in the search space to generate child neural network architectures; a training unit which may be configured to train the generated child neural network architectures using sample images to calculate losses of the generated child neural network architectures; and a reward feedback unit which may be configured to evaluate a reward of the control unit based on the losses of the generated child neural network architectures, and adjust the parameters of the control unit to make the reward bigger, wherein processing in the control unit, the training unit and the reward feedback unit is iteratively performed until a predetermined iteration termination condition is met.

According to another aspect of the present disclosure, a neural network architecture search method is provided. The neural network architecture search method includes: a search space defining step of defining a search space as a set of architecture parameters describing a neural network architecture, wherein the neural network architecture includes a fixed primary processing portion, a freely searchable down-sampling portion and a freely searchable up-sampling portion; a control step of sampling, based on parameters of a control unit, the architecture parameters in the search space to generate child neural network architectures; a training step of training the generated child neural network architectures using sample images to calculate losses of the generated child neural network architectures; and a reward feedback step of evaluating a reward of the control unit based on the losses of the generated child neural network architectures, and adjusting the parameters of the control unit to make the reward bigger, wherein processing in the control step, the training step and the reward feedback step is iteratively performed until a predetermined iteration termination condition is met.

According to yet another aspect of the present disclosure, a computer readable recording medium having a program recorded thereon is provided, and the program causes the computer to perform the following steps: a search space defining step of defining a search space as a set of architecture parameters describing a neural network architecture, wherein the neural network architecture includes a fixed primary processing portion, a freely searchable down-sampling portion and a freely searchable up-sampling portion; a control step of sampling, based on parameters of a control unit, the architecture parameters in the search space to generate child neural network architectures; a training step of training the generated child neural network architectures using sample images to calculate losses of the generated child neural network architectures; and a reward feedback step of evaluating a reward of the control unit based on the losses of the generated child neural network architectures, and adjusting the parameters of the control unit to make the reward bigger, wherein processing in the control step, the training step and the reward feedback step is iteratively performed until a predetermined iteration termination condition is met.

According to other aspects of the present disclosure, computer program codes and computer program products for implementing the above method according to the present disclosure are further provided.

Other aspects of the embodiments of the present disclosure are given in the following description, in which the detailed description is used for fully disclosing, without limiting, preferred embodiments of the embodiments of the present disclosure.

## BRIEF DESCRIPTION OF THE DRAWINGS

The present disclosure may be better understood by referring to the detailed description given below in conjunction with the drawings. In the drawings, same or similar reference numerals are utilized to represent same or similar components. The drawings together with the following detailed description are incorporated into the specification and form a part of the specification, and serve to further illustrate the preferred embodiments of the present disclosure and to explain the principle and advantages of the present disclosure by way of example. In the drawings:

Figure 1 is a block diagram showing an example of functional configuration of a neural network architecture search system according to an embodiment of the present disclosure;

Figure 2 shows a diagram of an example of a neural network architecture according to an embodiment of the present disclosure;

Figure 3 is a diagram showing an example of a layer structure of a down-sampling portion or an up-sampling portion in a neural network architecture according to an embodiment of the present disclosure;

Figure 4a and 4b are diagrams showing an example in which a control unit based on a recurrent neural network samples architecture parameters in a search space according to an embodiment of the present disclosure;

Figure 5 is a diagram showing an example of calculating an object distribution loss, an object offset loss and an object size loss according to an embodiment of the present disclosure;

Figure 6 is a flowchart showing an example of a flow of a neural network architecture search method according to an embodiment of the present disclosure; and

Figure 7 is a block diagram showing an example of a structure of a personal computer that may be adopted in an embodiment of the present disclosure.

## DETAILED DESCRIPTION OF EMBODIMENTS

Hereinafter, exemplary embodiments of the present disclosure will be described in conjunction with the drawings. For the sake of clarity and conciseness, not all the features of practical implementations are described in the specification. However, it is to be appreciated that numerous implementation-specific decisions shall be made during developing any of such practical implementations so as to achieve a specific goal of a developer, for example, to comply with those system-related and business-related constraining conditions, and these constraining conditions may vary from one implementation to another. Furthermore, it should also be understood that although the development work may be very complicated and time-consuming, for those skilled in the art benefiting from the present disclosure, such development work is only a routine task.

Here, it is further to be noted that in order to avoid obscuring the present disclosure due to unnecessary details, only the device structure and/or processing steps closely related to the solution according to the present disclosure are shown in the drawings, and other details less related to the disclosure are omitted.

In the following, embodiments according to the present disclosure will be illustrated in detail in conjunction with the drawings.

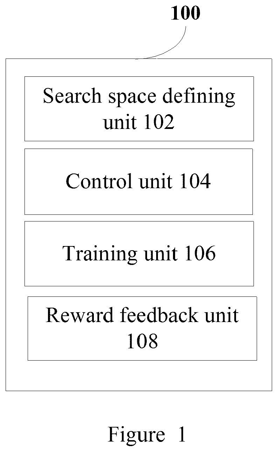

First, a functional block diagram of a neural network architecture search system 100 according to an embodiment of the present disclosure will be described with reference to Figure 1. Figure 1 is a block diagram showing an example of functional configuration of a neural network architecture search system 100 according to the embodiment of the present disclosure. As shown in Figure 1, the neural network architecture search system 100 according to the embodiment of the present disclosure includes a search space defining unit 102, a control unit 104, a training unit 106, and a reward feedback unit 108.

The search space defining unit 102 may be configured to define a search space as a set of architecture parameters describing a neural network architecture, wherein the neural network architecture includes a fixed primary processing portion, a freely searchable down-sampling portion and a freely searchable up-sampling portion.

The neural network architecture may be represented by the architecture parameters describing the neural network. Taking a simple convolutional neural network only including convolution layers as an example, each of the convolution layers has five parameters: convolution kernel number, convolution kernel height, convolution kernel width, convolution kernel stride height, and convolution kernel stride width. Therefore, each of the convolution layers may be represented by the above five-tuple array.

Due to limited computing resources, the search space of the neural network architecture must be limited. The search space defining unit 102 according to the embodiment of the present disclosure is configured to define the search space, that is, to define a full set of the architecture parameters describing the neural network architecture. After the full set of the architecture parameters is determined, an optimal neural network architecture may be searched for from the full set. As an example, the search space includes variable structural parameters (architecture parameters) in the neural network architecture, and the structural parameters may include specific operations, operation order, connection mode and the number of connection and so on. As an example, the full set of the architecture parameters of the neural network architecture may be defined according to experience.

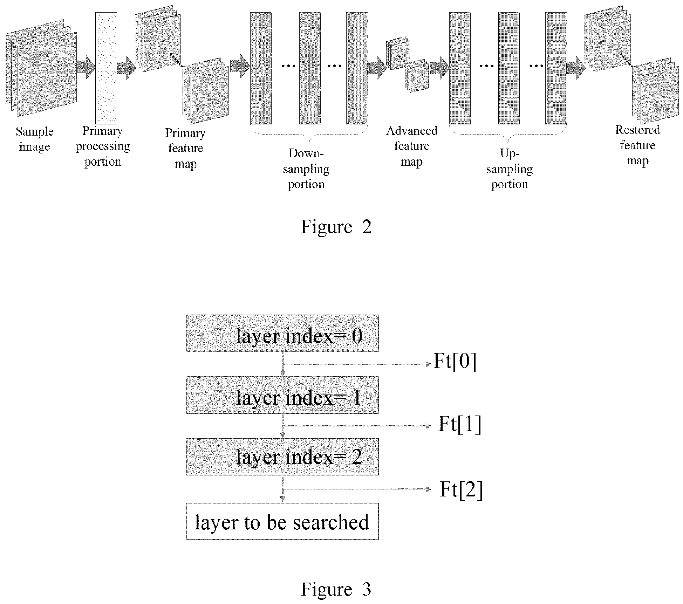

Figure 2 is a diagram showing an example of a neural network architecture according to an embodiment of the present disclosure.

As shown in Figure 2, the neural network architecture according to an embodiment of the present disclosure includes a fixed primary processing portion, a freely searchable down-sampling portion and a freely searchable up-sampling portion.

The fixed primary processing portion means that a structure of the primary processing portion is predetermined. As an example, the primary processing portion includes multiple convolution layers for extracting pixel-level primary visual information, wherein the above five parameters of the convolution layer are predetermined. That is, a main function of the primary processing portion is to extract primary pixel information (primary feature) from a sample image, so as to reduce calculation amount and redundant information for subsequent processing. As an example, as shown in Figure 2, the sample image is input to the primary processing portion and the output is a feature of the sample image. As an example, the feature may be a feature map. Hereinafter, for convenience of description, the feature is sometimes referred to as the feature map.

It is assumed that the width of the sample image is W, the height of the sample image is H, and the number of categories in the sample image is C (for example, C=1 in a case that the sample image is a grayscale image, and C=3 in a case that the sample image is an RGB image). As an example, in Figure 2, it is assumed that the sample image is an RGB image (C=3), the sample image includes three images for R, G and B, respectively. It is assumed that multiples of an output resolution is Ra (wherein the Ra is an integer and is greater than 0), the output of the primary processing portion is several primary feature maps of which a width is W/Ra and a height is H/Ra. In a case that each layer in the primary processing portion is a convolution layer, an output of the primary processing portion is CxCh primary feature maps of which a width is W/Ra and a height is H/Ra, wherein Ch is the number of channels set in the convolution layer.

The freely searchable down-sampling portion includes M layers, wherein the M is an integer greater than or equal to 1, and the M may be predetermined. As an example, the M may be predetermined based on a complexity of a task to be processed. The structure of the down-sampling portion is not fixed in advance, and the structure of each layer in the down-sampling portion may be obtained by performing an automatic search in the search space of the neural network architecture, that is, each layer in the down-sampling portion may be formed by automatically searching for several architecture parameters in the search space. As an example, the down-sampling portion may be configured to perform down-sampling and other processing on the feature map of the sample image through the operations included therein. That is, the down-sampling portion extracts more advanced features (abstract features) that may reflect characteristics of the sample image from the primary features output by the primary processing portion, such that advanced feature information of the sample image may be obtained via the down-sampling portion and the size of the feature map output by the primary processing portion may be further reduced, thereby saving the calculation amount and processing amount of the neural network architecture search system. As an example, as shown in Figure 2, each of CxCh primary feature maps with sizes of W/Ra x H/Ra output by the primary processing portion is processed into an advanced feature map with a smaller size after down-sampling performed by the down-sampling portion.

The structure of the up-sampling portion is also not fixed in advance, and the structure of each layer in the up-sampling portion may be obtained by performing an automatic search in the search space of the neural network architecture, that is, each layer in the up-sampling portion may be formed by automatically searching for several architecture parameters in the search space. The number of layers included in the up-sampling portion may be the same as or different from the number of layers included in the down-sampling portion. As an example, the up-sampling portion may be configured to perform up-sampling and other processing on the advanced features output by the down-sampling portion through the operations included therein. The up-sampling portion is substantially designed symmetrically with the down-sampling portion. As an example, the down-sampling portion may include multiple convolution layers, and the up-sampling portion may include multiple deconvolution layers. In a case that the down-sampling portion performs i (i is an integer greater than or equal to 1) times of down-sampling on the primary features output from the primary processing portion to output advanced features, the up-sampling portion performs i times of up-sampling on the advanced features output from the down-sampling portion, such that the features output from the up-sampling portion have the same size as the primary features output from the primary processing portion. That is, the up-sampling portion may restore the size of the advanced features output by the down-sampling portion to be equal to the size of the primary features output by the primary processing portion. As an example, as shown in Figure 2, the advanced feature map output by the down-sampling portion is restored to a feature map with a size that equals to W/Ra x H/Ra (shown as a restored feature map in Figure 2) after up-sampling performed by the up-sampling portion.

The control unit 104 may be configured to sample, based on parameters of the control unit 104, the architecture parameters in the search space to generate child neural network architectures.

Sampling the architecture parameters in the search space refers to a case in which the architecture parameters are automatically searching for from the search space. The sampled architecture parameters may be used to generate the child neural network architectures, so as to determine specific operations and connections in the generated child neural network architectures. If current parameters of the control unit 104 are represented by $\theta$, the control unit 104 samples the architecture parameters in the search space with $\theta$ to generate at least one child neural network architecture. Each of the child neural network architectures is a subset of the search space.

As described above, the structure of the primary processing portion is fixed (predetermined). As an example, the specific structures of the down-sampling portion and the up-sampling portion are determined through the search performed by the neural network architecture search system 100 according to an embodiment of the present disclosure (specifically, the control unit 104 samples the architecture parameters in the search space based on the parameter $\theta$ of the control unit 104), that is, it may be determined which specific operations are included in the down-sampling portion and the up-sampling portion. After the structures of the down-sampling portion and the up-sampling portion are determined by searching, a specific neural network architecture (more specifically, a child neural network architecture obtained by sampling) may be obtained.

The number of the child neural network architectures obtained by sampling may be preset according to actual situations.

The training unit 106 may be configured to train the generated child neural network architectures using the sample image to calculate losses of the generated child neural network architectures.

As an example, the training unit 106 calculates a loss of each of the generated child neural network architectures using all sample images in a training set, and trains each of child neural network architectures to minimize the loss, such that values of the architecture parameters of each of child neural networks may be determined, that is, each of the trained child neural networks architecture may be obtained.

The reward feedback unit 108 may be configured to evaluate a reward of the control unit 104 based on the losses of the generated child neural network architectures, and adjust the parameters of the control unit to make the reward bigger. As an example, the reward feedback unit 108 may be configured to calculate a loss of each of the trained child neural network architectures using all sample images in a validation set, and to evaluate the reward of the control unit 104 based on the loss.

It is assumed that $\omega$ is used to represent a parameter of the trained one child neural network architecture (that is, a value of the architecture parameter of the one child neural network architecture), a loss of the one child neural network architecture is represented as $Ls(\omega)$. The reward $Re(\omega)$ of the control unit 104 may be evaluated based on the loss $Ls(\omega)$. As an example, the reward of the control unit 104 may be defined as $Re(\omega)=fun(Ls(\omega))$, that is, the reward $Re(\omega)$ of the control unit 104 may be represented as a function of the loss $Ls(\omega)$ of the child neural network architecture.

For a case in which at least one child neural network architecture is obtained by sampling when the parameter of the control unit 104 is $\theta$, a set of reward of the control unit 104 may be obtained based on the loss of the at least one child neural network architecture, wherein the set of reward is represented as $Re'(\omega)$). $E_{P(\theta)}[Re'(\omega)]$ represents an expectation of $Re'(\omega)$. An object of the present disclosure is to adjust the parameter $\theta$ of the control unit 104 under a certain optimization strategy P($\theta$), to maximize the expectation value of $Re'(\omega)$. As an example, in a case that only a single child network architecture is obtained by sampling, an object of the present disclosure is to adjust the parameter $\theta$ of the control unit 104 under a certain optimization strategy P($\theta$), to maximize the reward of the control unit 104.

As an example, optimization strategy commonly used in reinforcement learning may be used to perform optimization. For example, Proximal Policy Optimization or Gradient Policy Optimization may be used.

As an example, the parameter $\theta$ of the control unit 104 is adjusted to make an expectation value of the set of reward of the control unit 104 bigger. As an example, the adjusted parameters of the control unit 104 may be generated based on the set of reward and the current parameters $\theta$ of the control unit 104.

The reward feedback unit 108 according to the embodiment of the present disclosure adjusts the parameters of the control unit based on the above reward, such that the control unit may sample the child neural network architecture capable of making the reward bigger based on the adjusted parameters.

In the neural network architecture search system 100 according to the embodiment of the present disclosure, processing in the control unit 104, the training unit 106, and the reward feedback unit 108 is iteratively performed until a predetermined iteration termination condition is met.

As an example, during subsequent iteration per round, the control unit 104 resamples the architecture parameters in the search space based on the adjusted parameters of the control unit 104 to regenerate child neural network architectures. The training unit 106 trains each of the regenerated child neural network architectures, and the reward feedback unit 108 evaluates the reward of the control unit 104 based on the losses of the trained child neural network architectures, and adjusts the parameters of the control unit 104 again to make the reward of the control unit 104 bigger.

As an example, the predetermined iteration termination condition includes that the expectation of the reward reaches a predetermined value or the number of times for the training reaches a predetermined number of times (i.e., reach the maximum number of iterations). As an example, one child neural network architecture with the best performance may be selected from the child neural network architectures obtained at the termination of iteration for subsequent processing (for example, for object detection, and so on). As an example, the selected child neural network architecture may be retrained for subsequent processing (for example, for object detection, and so on).

It can be seen from the above description that, the neural network architecture search system 100 according to an embodiment of the present disclosure is a single branch end-to-end backbone system.

In summary, with the neural network architecture search system 100 according to the embodiment of the present disclosure, advanced features (abstract features) reflecting characteristics of the sample image may be obtained via the freely searchable down-sampling portion, such that neural network architectures with stronger universality may be automatically searched, without more resources and professional engineers.

As an example, the search space defining unit 102 may be configured to define the search space for object detection. Therefore, for a certain actual object detection problem, the neural network architecture search system 100 according to the embodiment of the present disclosure automatically searches for one neural network architecture suitable for the object detection. Preferably, the child neural network architecture obtained at the termination of the above iteration may be used for the object detection.

Figure 3 is a diagram showing an example of a layer structure of a down-sampling portion or an up-sampling portion in a neural network architecture according to an embodiment of the present disclosure. The number of layers of the down-sampling portion or the up-sampling portion may be preset. As shown in Figure 3, each layer has a serial number, that is "layer index". Ft is used to represent a feature map output by each layer. For example, Ft[0] represents a feature map output by a layer of which layer index is 0, Ft[1] represents a feature map output by a layer of which layer index is 1, Ft[2] represents a feature map output by a layer of which layer index is 2. In Figure 3, a gray rectangle is used to represent layers of which structure (that is, architecture parameters) have been determined through search (for example, the layer whose layer index is 0, the layer whose layer index is 1, and the layer whose layer index is 2), and a white rectangle is used to represent a to-be-searched layer of which architecture parameters are to be searched.

Preferably, the set of architecture parameters may include any combination of 3x3 convolution, 5x5 convolution, 3x3 depth separable convolution, 5x5 depth separable convolution, 3x3 maximum pooling, 3x3 average pooling, identity transformation, 3x3 deformable convolution, 3x3 deconvolution and 5x5 deconvolution. As an example, the above combination of 3x3 convolution, 5x5 convolution, 3x3 depth separable convolution, 5x5 depth separable convolution, 3x3 maximum pooling, 3x3 average pooling, identity transformation, 3x3 deformable convolution, 3x3 deconvolution and 5x5 deconvolution may be used as operations included in each of layers in the down-sampling portion and the up-sampling portion. As an example rather than a limitation, at least two of deformable convolution, deconvolution and convolution may be used as operations included in the up-sampling portion, wherein the deformable convolution may be 3x3 deformable convolution, the deconvolution may be 3x3 deconvolution or 5x5 deconvolution, and the convolution may be 3x3 convolution or 5x5 convolution. As an example rather than a limitation, at least two of convolution, pooling and separable convolution may be used as operations included in the down-sampling portion, wherein the convolution may be 3x3 convolution or 5x5 convolution, the pooling may be 3x3 maximum pooling or 3x3 average pooling, and the separable convolution may be 3x3 depth separable convolution or 5x5 depth separable convolution. The above set of architecture parameters is more suitable for solving the problem of object detection.

The set of architecture parameters is not limited to the above operations. As an example, the set of architecture parameters may also include 1x1 convolution kernel, 7x7 convolution kernel, 1x1 depth separable convolution, 7x7 depth separable convolution, 1x1 maximum pooling, 5x5 maximum pooling, 1x1 average pooling, 5x5 average pooling, 5x5 deformable convolution and so on.

Preferably, the control unit 104 may include a recurrent neural network RNN. The adjusted parameters of the control unit including the RNN may be generated based on and the current parameters of the control unit including the RNN and the reward.

Hereinafter, for the sake of clarity, the control unit 104 including the RNN will be referred to as an RNN-based control unit 104.

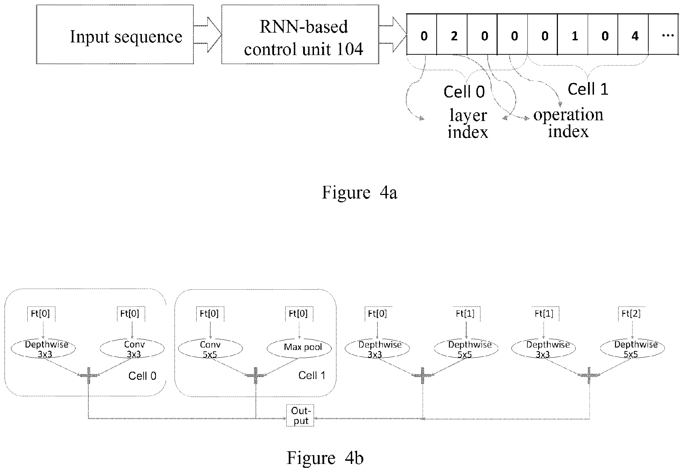

Figures 4a and 4b are diagrams showing an example in which an RNN-based control unit 104 samples architecture parameters in a search space according to an embodiment of the present disclosure.

As shown in Figure 4a, an input sequence is input into the RNN-based control unit 104. The input sequence is a series of sequences that are randomly generated. The RNN-based control unit 104 samples the architecture parameters in the search space based on the parameters of the control unit 104. The output of the RNN-based control unit 104 is a sequence representing architecture parameters of one layer in a child neural network architecture. A value of each of bits in the output sequence represents the sampled architecture parameters of the search space, and the value has definite structural meaning.

In the following description, for convenience of presentation, operation indexes may be assigned for the architecture parameters. As an example, operation index for 3x3 convolution is operation 0, operation index for 5x5 convolution is operation 1, operation index for 3x3 depth separable convolution is operation 2, operation index for 5x5 depth separable convolution is operation 3, operation index for 3x3 maximum pooling is operation 4, operation index for 3x3 average pooling is operation 5, operation index for identity transformation is operation 6, operation index for 3x3 deformable convolution is operation 7, operation index for 3x3 deconvolution is operation 8, and operation index for 5x5 deconvolution is operation 9.

It is assumed in Figure 4a that an output sequence of the RNN-based control unit 104 is 0 2 0 0 0 1 0 4 0 2 1 3 1 2 2 3, and a structure represented by the output sequence is as shown in Figure 4b. It should be noted that in Figure 4a, for the sake of clarity, only the first 8 digits of the output sequence "0 2 0 0 0 1 0 4" are specifically shown.

Every four digits in the output sequence are marked as a cell. For example, "0200" is marked as Cell 0, and "0 1 0 4" is marked as Cell 1. As an example, Cell 0 in Figure 4a corresponds to operations of two branches represented by ellipses in Cell 0 of Figure 4b (wherein the left ellipse in the Cell 0 of Figure 4b represents a first branch and the right ellipse in the Cell 0 of Figure 4b represents a second branch), and Cell 1 in Figure 4a corresponds to operations of two branches represented by ellipses in Cell 1 of Figure 4b.

The Cell 0 in Figure 4a is taken as an example below to briefly describe the structure represented by Cell 0. The first number 0 in the Cell 0 of Figure 4a indicates that a layer index is 0, which means that an output Ft[0] of a layer with the layer index of 0 is used as an input of the first branch in the Cell 0 of Figure 4b, the second number 2 in the Cell 0 of Figure 4a indicates that an operation index is operation 2. As described above, operation 2 is 3x3 depth separable convolution (in Figure 4b, it is marked as "Depthwise 3x3"). The third number 0 in the Cell 0 of Figure 4a indicates that a layer index is 0, which means that an output Ft[0] of a layer with the layer index of 0 is used as an input of the second branch in the Cell 0 of Figure 4b, and the fourth number 0 in the Cell 0 of Figure 4a indicates that an operation index is operation 0. As described above, operation 0 is 3x3 convolution (in Figure 4b, it is marked as "Conv 3x3").

In a similar manner, the structure represented by "0 1 0 4 0 2 1 3 1 2 2 3" in the output sequence may be determined, and thus, a specific structure of a layer in the child neural network architecture may be obtained. It should be noted that, in Figure 4b, for the sake of brevity, the 5x5 convolution is marked as "Conv 5x5", the maximum pooling is marked as "Max pool", and the 5x5 depth separable convolution is marked as "Depthwise 5x5".

In the above, the output sequence of 16 bits is taken as an example to describe. However, those skilled in the art should understand that the output sequence is not limited to 16 bits.

Preferably, each of the down-sampling portion and the up-sampling portion includes multiple layers, and the control unit 104 obtains architecture parameters of each layer of the down-sampling portion and the up-sampling portion by sampling layer-by-layer. Therefore, structures of at least a part of the multiple layers of the down-sampling portion may be different from each other, and structures of at least a part of the multiple layers of the up-sampling portion may be different from each other.

Preferably, each of the down-sampling portion and the up-sampling portion includes multiple layers, and the control unit 104 obtains architecture parameters of a first layer of the down-sampling portion and architecture parameters of a first layer of the up-sampling portion by sampling, and architecture parameters of other layers of the down-sampling portion are set to be the same as those of the first layer of the down-sampling portion, and architecture parameters of other layers of the up-sampling portion are set to be the same as those of the first layer of the up-sampling portion. As an example, the control unit 104 may set architecture parameters of other layers of the down-sampling portion to be the same as the structure of the first layer of the down-sampling portion and set architecture parameters of other layers of the up-sampling portion to be the same as the structure of the first layer of the up-sampling portion. In this way, the calculation amount and processing amount of the neural network architecture search system 100 may be saved.

After the structure of each layer of the down-sampling portion and the up-sampling portion is obtained, a child neural network architecture may be generated, that is, a specific structure of the neural network architecture according to an embodiment of the present disclosure (more specifically, the child neural network architecture obtained by sampling) may be obtained.

In the above, in a case that ω is used to represent parameters of the trained one child neural network architecture, the loss of the one child neural network architecture is represented as $Ls(\omega)$, and the reward of the control unit 104 is represented as $Re(\omega)$. Hereinafter, for the sake of description, the loss of the child neural network architecture is abbreviated as $Ls$ and the reward of the control unit 104 is represented as $Re$.

Preferably, the loss $Ls$ of the child neural network architecture includes multiple losses related to the object detection, and the multiple losses include an object distribution loss, an object offset loss and an object size loss, and the reward feedback unit 108 may be configured to adjust the parameters of the control unit 104 based on at least one of the object distribution loss, the object offset loss and the object size loss. The object distribution loss, the object offset loss and the object size loss will be briefly described below.

As described in Figure 2, the width of the sample image is W and the height of the sample image is H, the number of categories included in the sample image is C, and the multiples of output resolution is Ra. Predicted values of C thermal maps may be calculated based on the output of the child neural network architecture, wherein the thermal map reflects a distribution intensity of object, and each thermal map has a width of W/Ra and a height of H/Ra. A true value of a certain point on the thermal map may be represented as follows:

$$y1 = \exp\left(-\frac{(m-p_m)^2+(n-p_n)^2}{2\sigma_p^2}\right) \quad (1)$$

In formula (1), m and n are an abscissa and an ordinate of any of points on the thermal map respectively, $p_m$ is an abscissa of a predicted object, $p_n$ is an ordinate of the predicted object, and $\sigma_p$ is an adaptive standard deviation obtained by calculation. $y1$ may be understood as a prediction probability, and $y1$ is a value in a range from 0 to 1. For example, if $y1$ is equal to 1, it is indicated that there is definitely an object at $(p_m,p_n)$, and if $y1$ is equal to 0, it is indicated that there is definitely no object at $(p_m,p_n)$.

It is assumed that a predicted value of a certain point on the thermal map is $y1'$. The object distribution loss *Loss* 1 may be calculated based on the true value $y1$ and the predicted value $y1'$.

It is assumed that $p$ is used to represent a pixel position of the object in the sample image. Since the width and height of the output feature map of the last layer of the up-sampling portion of the child neural network architecture are both 1/Ra of the width and height of the sample image, the position of the object in the output feature map of the child neural network architecture is $p/Ra$, and thus, a true value of the offset amount of the object position may be calculated as follows:

$$y2 = \frac{p}{Ra} - \hat{p} \quad (2)$$

In formula (2), $\hat{p}$ represents a pixel position of the predicted object.

The training unit 106 may calculate a predicted value $y2'$ of the offset amount of the object position.

The object offset loss *Loss* 2 may be calculated based on the true value $y2$ of the offset amount of the object position and the predicted value $y2'$ of the offset amount of the object position.

The true value of the size of the object may be represented as follows:

$$y3 = (m_2\text{-}m_1,\ n_2\text{-}n_1) \quad (3)$$

In formula (3), $m_1$ represents a minimum value of the abscissa in a bounding box of the object, $m_2$ represents a maximum value of the abscissa in the bounding box of the object, $n_1$ represents a minimum value of the ordinate in the bounding box of the object, and $n_2$ represents a maximum value of the ordinate in the bounding box of the object.

The training unit 106 may calculate a predicted value $y3'$ of the size of the object.

The object size loss *Loss* 3 may be calculated based on the true value $y3$ of the size of the object and the predicted value $y3'$ of the size of the object.

As an example, the reward feedback unit 108 may be configured to evaluate the reward of the control unit 104 based on at least one of the above object distribution loss *Loss* 1, the object offset loss *Loss* 2, and the object size loss *Loss* 3, and to adjust the parameters of the control unit 104 to make the reward bigger.

Preferably, the loss *Ls* of the child neural network architecture includes multiple losses related to object detection, and the multiple losses include the object distribution loss, the object offset loss and the object size loss. The reward feedback unit may be configured to adjust the parameters of the control unit 104 based on the object distribution loss, the object offset loss and the object size loss, wherein the object distribution loss, the object offset loss and the object size loss are each related to the output features of the child neural network architecture.

In the above, elements related to a calculation of the object distribution loss, the object offset loss, and the object size loss are described. Hereinafter, a specific exemplary method for calculating the object distribution loss, the object offset loss, and the object size loss will be described.

The output feature $y'$ of the child neural network architecture may be an output feature map of the last layer of the up-sampling portion of the child neural network architecture.

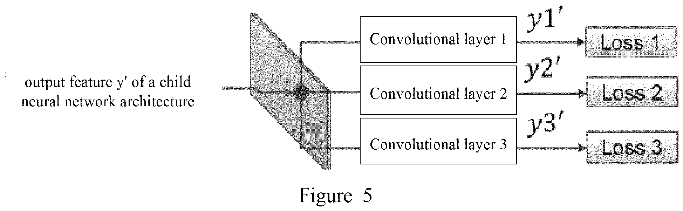

Figure 5 is a diagram showing an example of calculating an object distribution loss, an object offset loss, and an object size loss according to an embodiment of the present disclosure. In order to simplify the description, in Figure 5, based on the output feature *y'* of the child neural network architecture, a predicted value *y*1' of a certain point on a thermal map, a predicted value *y*2' of offset amount of an object position and a predicted value *y*3' of a size of an object are calculated via a convolutional layer 1, a convolutional layer 2 and a convolutional layer 3, respectively.

Since the neural network architecture search system 100 according to the embodiment of the present disclosure is the above single branch end-to-end backbone system, it can be seen from formulas (4)-(6) that the predicted value *y*1' of a certain point on the thermal map, the predicted value *y*2' of the offset amount of the object position and the predicted value *y*3' of the size of the object may be calculated based on the output feature *y'*.

$$y1' = w_1 y' + b_1 = g1(y') \qquad (4)$$

In formula (4), $w_1$ and $b_1$ are parameters of the convolutional layer 1, which may be set according to experience, and $g1(y')$ means that *y*1' may be represented as a function of *y'*.

$$y2' = w_2 y' + b_2 = g2(y') \qquad (5)$$

In formula (5), $w_2$ and $b_2$ are parameters of the convolutional layer 2, which may be set according to experience, and $g2(y')$ means that *y*2' may be represented as a function of *y'*.

$$y3' = w_3 y' + b_3 = g3(y') \qquad (6)$$

In formula (6), $w_3$ and $b_3$ are parameters of the convolution layer 3, which may be set according to experience, and $g3(y')$ means that y3' may be represented as a function of *y'*.

According to formulas (4)-(6), it can be seen from formulas (7)-(8) that the object distribution loss *Loss* 1, the object offset loss *Loss* 2 and the object size loss *Loss* 3 may be calculated based on the output feature *y'*.

The object distribution loss *Loss* 1 may be represented as follows:

$$Loss1 = \left\| y1 - y1' \right\| = \left\| y1 - g1(y') \right\| = G1(y') \qquad (7)$$

In formula (7), *y*1 is a true value of a certain point on the thermal map, and *G*1(*y'*) means that *Loss* 1 may be represented as a function of *y'*.

The object offset loss *Loss* 2 may be represented as follows:

$$Loss2 = \left\| y2 - y2' \right\| = \left\| y2 - g2(y') \right\| = G2(y') \qquad (8)$$

In formula (8), *y*2 is a true value of the offset amount of the object position, and *G*2(*y'*) means that *Loss* 2 may be represented as a function of *y'*.

The object size loss *Loss* 3 may be represented as follows:

$$Loss3 = \left\| y3 - y3' \right\| = \left\| y3 - g3(y') \right\| = G3(y') \qquad (9)$$

In formula (9), *y*3 is a true value of the size of the object, and *G*3(*y'*) means that *Loss* 3 may be represented as a function of y'.

It can be seen from formulas (7)-(9) that the object distribution loss *Loss* 1, the object offset loss *Loss* 2, and the object size loss *Loss* 3 are all related to the output feature *y'* of the child neural network architecture.

In a case that the reward feedback unit 108 adjusts the parameters of the control unit 104 based on the object distribution loss *Loss* 1, the object offset loss *Loss* 2 and the object size loss *Loss* 3, the loss *Ls* of the child neural network architecture may be represented as a function of G1(*y'*), G2(*y'*), G3(*y'*):

$$Ls = f(Loss1, Loss2, Loss3) = f(\text{G1}(y'), \text{G2}(y'), \text{G3}(y')) \qquad (10)$$

Then, the reward Re of the control unit 104 may be represented as follows:

$$Re = \beta \cdot f(\text{G1}(y'), \text{G2}(y'), \text{G3}(y')) \qquad (11)$$

In formula (11), $\beta$ is a parameter, which may be determined according to experience.

According to formulas (4)-(11), since the neural network architecture search system 100 according to an embodiment of the present disclosure is a single branch end-to-end backbone system, there is a space correspondence between the output features of the child neural network architecture and the sample images. As an example, based on output feature maps of child neural network architectures, a corresponding pixel in the sample image may be traced, that is, based on any part of the output feature maps of the child neural network architectures, a pixel in the sample image corresponding to the part in spatial position relationship may be traced. However, in the two-stage object detection system in the conventional art, first, regions where objects may appear are extracted, and then the objects are searched. With this two-stage object detection system, spatial structures of features of the sample image are destroyed, such that there is no spatial correspondence between the output feature and the sample image.

Corresponding to the above embodiment of the neural network architecture search system, the following embodiment of the neural network architecture search method is further provided according to the present disclosure.

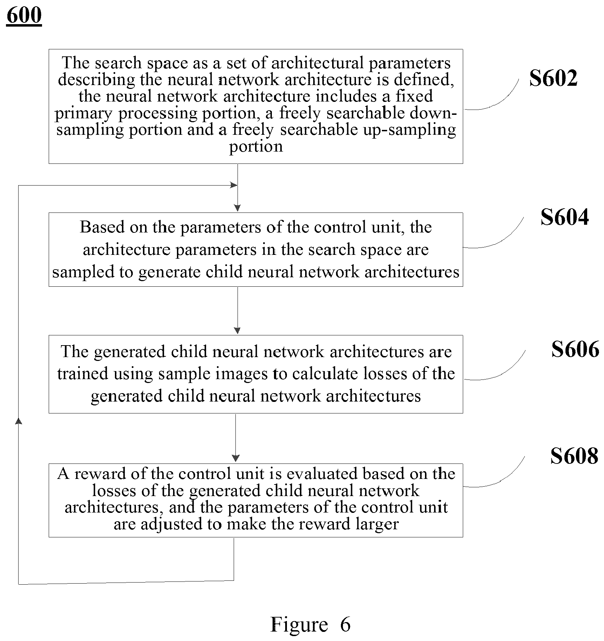

Figure 6 is a flowchart showing an example of a flow of a neural network architecture search method 600 according to an embodiment of the present disclosure.

As shown in Figure 6, the neural network architecture search method 600 according to the embodiment of the present disclosure includes a search space defining step S602, a control step S604, a training step S606, and a reward feedback step S608 for a neural network architecture.

In the search space defining step S602, the search space as a set of architectural parameters describing the neural network architecture is defined, wherein the neural network architecture includes a fixed primary processing portion, a freely searchable down-sampling portion and a freely searchable up-sampling portion.

As an example, the primary processing portion includes multiple convolutional layers configured to extract pixel-level primary visual information.

Specific examples of the search space, the fixed primary processing portion, the freely searchable down-sampling portion and the freely searchable up-sampling portion included in the neural network architecture may refer to the description of the corresponding part such as the training unit 106 and Figure 2 in the above embodiments of the device, which is not repeated here.

In the control step S604, based on the parameters of the control unit, the architecture parameters in the search space are sampled to generate child neural network architectures.

Specific examples of sampling the architecture parameters in the search space may refer to the description of the corresponding part such as the control unit 104 in the above embodiments of the device, which is not repeated here.

In the training step S606, the generated child neural network architectures are trained using sample images to calculate losses of the generated child neural network architectures.

In the reward feedback step S608, a reward of the control unit is evaluated based on the losses of the generated child neural network architectures and the parameters of the control unit are adjusted to make the reward larger.

Specific examples of reward and adjustment of the parameters of the control unit may refer to the description of the corresponding part such as the reward feedback unit 108 in the above embodiments of the device, which is not repeated here.

In the neural network architecture search method 600 according to an embodiment of the present disclosure, processing in the control step S604, the training step S606 and the reward feedback step S608 is iteratively performed until a predetermined iteration termination condition is met.

As an example, the predetermined iteration termination condition includes that the expectation of the reward reaches a predetermined value or the number of times for the training reaches a predetermined number of times.

Specific examples of iterative processing may refer to the description of the corresponding part in the above embodiments of the device, which is not repeated here.

In summary, with the neural network architecture search method 600 according to the embodiment of the present disclosure, advanced features (abstract features) reflecting characteristics of the sample image may be obtained via the freely searchable down-sampling portion, such that neural network architectures with stronger universality may be automatically searched, without more resources and professional engineers.

Preferably, in the search space defining step S602 of the neural network architecture, the search space is defined for the object detection. Therefore, for a certain actual object detection problem, with the neural network architecture search method 600 according to the embodiment of the present disclosure, a neural network architecture suitable for the object detection is automatically searched. Preferably, the child neural network architecture obtained at the termination of the above iteration may be used for the object detection.

Preferably, the set of architecture parameters may include any combination of 3x3 convolution, 5x5 convolution, 3x3 depth separable convolution, 5x5 depth separable convolution, 3x3 maximum pooling, 3x3 average pooling, identity transformation, 3x3 deformable convolution, 3x3 deconvolution and 5x5 deconvolution. As an example, the above combination of 3x3 convolution, 5x5 convolution, 3x3 depth separable convolution, 5x5 depth separable convolution, 3x3 maximum pooling, 3x3 average pooling, identity transformation, 3x3 deformable convolution, 3x3 deconvolution and 5x5 deconvolution may be used as operations included in each of layers in the down-sampling portion and the up-sampling portion. As an example rather than a limitation, at least two of deformable convolution, deconvolution and convolution may be used as operations included in the up-sampling portion, wherein the deformable convolution may be 3x3 deformable convolution, the deconvolution may be 3x3 deconvolution or 5x5 deconvolution, and the convolution may be 3x3 convolution or 5x5 convolution. As an example rather than a limitation, at least two of convolution, pooling and separable convolution may be used as operations included in the down-sampling portion, wherein the convolution may be 3x3 convolution or 5x5 convolution, the pooling may be 3x3 maximum pooling or 3x3 average pooling, and the separable convolution may be 3x3 depth separable convolution or 5x5 depth separable convolution. The above set of architecture parameters is more suitable for solving the problem of object detection.

Preferably, the control unit 104 may include a recurrent neural network RNN. The adjusted parameters of the control unit including the RNN may be generated based on and the current parameters of the control unit including the RNN and the reward.

Preferably, each of the down-sampling portion and the up-sampling portion includes multiple layers, and in control step S604, architecture parameters of each layer of the down-sampling portion and the up-sampling portion may be obtained by sampling layer-by-layer. Therefore, structures of at least a part of the multiple layers of the down-sampling portion may be different from each other, and structures of at least a part of the multiple layers of the up-sampling portion may be different from each other.

Preferably, each of the down-sampling portion and the up-sampling portion includes multiple layers, and in control step S604, architecture parameters of a first layer of the down-sampling portion and architecture parameters of a first layer of the up-sampling portion may be obtained by sampling, and architecture parameters of other layers of the down-sampling portion are set to be the same as those of the first layer of the down-sampling portion, and architecture parameters of other layers of the up-sampling portion are set to be the same as those of the first layer of the up-sampling portion. In this way, the calculation amount and processing amount of the neural network architecture search method 600 may be saved.

Preferably, the losses of the child neural network architectures include multiple losses related to the object detection, and the multiple losses include an object distribution loss, an object offset loss and an object size loss. In the reward feedback step S608, the parameters of the control unit may be adjusted based on at least one of the object distribution loss, the object offset loss and the object size loss.

Specific descriptions of the object distribution loss, the object offset loss, and the object size loss may refer to the description of the corresponding part (for example, formulas (1)-(3)) in the above embodiments of the device, which is not repeated here.

Preferably, the losses of the child neural network architectures include multiple losses related to the object detection, and the multiple losses include an object distribution loss, an object offset loss and an object size loss. In the reward feedback step S608, the parameters of the control unit may be adjusted based on the object distribution loss, the object offset loss and the object size loss, wherein each of the object distribution loss, the object offset loss and the object size loss is related to the output features of the child neural network architectures.

Specific description of a specific example method for calculating the object distribution loss, the object offset loss and the object size loss may refer to the description of the corresponding part (for example, Figure 5 and the related formulas (4)-(10)) in the above embodiments of the device, which is not repeated here.

Since the neural network architecture search method 600 according to an embodiment of the present disclosure adopts a single branch end-to-end searching manner, there is a space correspondence between output features of child neural network architectures and sample images. As an example, based on the output feature map of the child neural network architecture, a corresponding pixel in the sample image may be traced, that is, based on any part of the output feature maps of the child neural network architectures, a pixel in the sample image corresponding to the part in spatial position relationship may be traced.

It should be noted that, although the function configuration of the neural network architecture search system according to the embodiments of the present disclosure is described as above, this is only an example rather than a limitation, and those skilled in the art may modify the above embodiments in accordance with principles of the present disclosure, for example, function modules in each embodiment may be added, deleted, or combined, and such modifications each fall within the scope of the present disclosure.

In addition, it should be noted that the embodiments of the method correspond to the above embodiments of the system. Content that is not described in detail in the embodiments of the method may refer to the description of the corresponding part in embodiments of the system, which is not repeated here.

In addition, a storage medium and a program product are also provided according to the present disclosure. The storage medium and the machine-executable instruction in the program product according to the embodiments of the present disclosure may be configured to execute the above described neural network architecture search method, such that the content that is not described in detail herein may refer to the description of the corresponding part previously, which is not repeated here.

Accordingly, a storage medium on which the above program product storing machine executable instructions is carried is also included in the disclosure of the present disclosure. The storage medium includes but is not limited to a floppy disk, a compact disk, a magneto-optical disk, a storage card, a memory rod and so on.

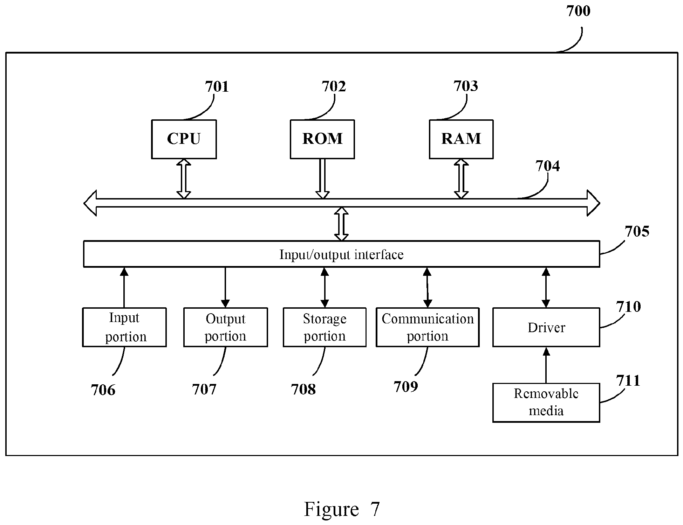

In addition, it should also be noted that the series of processes and devices described above may also be implemented in software and/or firmware. In a case of being implemented in software and/or firmware, a program constituting the software is installed from the storage medium or a network to a computer with a dedicated hardware structure, for example, a general purpose personal computer 700 shown in Figure 7, which may perform various functions when various programs are installed thereon.

In Figure 7, a central processing unit (CPU) 701 performs various processing based on the program stored in a read only memory (ROM) 702 or the program loaded from the storage portion 708 to a random access memory (RAM) 703. In the RAM 703, data required by the CPU 701 to execute various processes and so on is also stored as needed.

The CPU 701, the ROM 702 and the RAM 703 are connected to each other via a bus 704. An input/output interface 705 is also connected to the bus 704.

The following components are connected to the input/output interface 705: an input portion 706 including a keyboard, a mouse and so on; an output portion 707 including a display such as a cathode ray tube (CRT) and a liquid crystal display (LCD), and a speaker and so on; a storage portion 708 including a hard disk and so on; and a communication portion 709 including a network interface card such as a LAN card, a modem and so on. The communication portion 709 performs communication processing via a network such as the Internet.

A driver 710 may also be connected to the input/output interface 705 as needed. A removable media 711 such as a magnetic disk, a compact disk, a magneto-optical disk, a semiconductor memory and so on is installed on the driver 710 as needed, such that a computer program read out therefrom is installed into the storage portion 708 as needed.

In a case that the above-described series of processing are implemented in software, a program constituting the software is installed from the network such as the Internet or the storage medium such as the removable medium 711.

It should be understood by those skilled in the art that the storage medium is not limited to the removable medium 711 shown in Figure 7 in which the program is stored and which is distributed separately from the apparatus so as to provide the program to the user. The removable medium 711 may include, for example, a magnetic disk (including a floppy disk (registered trademark)), a compact disk (including a compact disk read-only memory (CD-ROM) and a digital versatile disk (DVD)), a magneto-optical disk (including a mini disk (MD) (registered trademark)), and a semiconductor memory. Alternatively, the storage medium may include the ROM 702, a hard disk contained in the storage portion 708, and so on, in which programs are stored and distributed to the user along with the apparatus containing them.

Preferred embodiments of the present disclosure have been described above with reference to the drawings, but the present disclosure is not limited to the above examples of course. Those skilled in the art may devise various alternations and modifications within the scope of the appended claims, and it should be understood that these alternations and modifications would naturally fall within the technical scope of the present disclosure.

For example, multiple functions included in one unit in the above embodiments may be implemented by separated devices. Alternately, in above embodiments, multiple functions implemented by multiple units may be implemented by separated devices respectively. In addition, one of the above functions may be implemented by multiple units. Needless to say, such configurations are included in the technical scope of the present disclosure.

In the specification, steps described in the flowchart include not only the processing performed chronologically, but also the processing performed in parallel or individually rather than chronologically. Furthermore, even in the step of processing chronologically, it is needless to mention that the order may also be changed appropriately.

In addition, the technology according to the present disclosure may also be configured as follows.

Appendix 1. A neural network architecture search system, including:

a search space defining unit configured to define a search space as a set of architecture parameters describing a neural network architecture, wherein the neural network architecture comprises a fixed primary processing portion, a freely searchable down-sampling portion and a freely searchable up-sampling portion;

a control unit configured to sample, based on parameters of the control unit, the architecture parameters in the search space to generate child neural network architectures;

a training unit configured to train the generated child neural network architectures using sample images to calculate losses of the generated child neural network architectures; and

a reward feedback unit configured to: evaluate a reward of the control unit based on the losses of the generated child neural network architectures, and adjust the parameters of the control unit to make the reward bigger,

wherein processing in the control unit, the training unit and the reward feedback unit is iteratively performed until a predetermined iteration termination condition is met.

Appendix 2. The neural network architecture search system according to appendix 1, wherein the search space defining unit is configured to define the search space for object detection.

Appendix 3. The neural network architecture search system according to appendix 2, wherein
the losses include multiple losses related to the object detection, and the multiple losses include an object distribution loss, an object offset loss, and an object size loss, and
the reward feedback unit is configured to adjust the parameters of the control unit based on at least one of the object distribution loss, the object offset loss, and the object size loss.

Appendix 4. The neural network architecture search system according to appendix 2, wherein
the losses include multiple losses related to the object detection, and the multiple losses include an object distribution loss, an object offset loss, and an object size loss, and
the reward feedback unit is configured to adjust the parameters of the control unit based on the object distribution loss, the object offset loss, and the object size loss, wherein each of the object distribution loss, the object offset loss, and the object size loss is related to output features of the child neural network architectures.

Appendix 5. The neural network architecture search system according to appendix 1, wherein each of the down-sampling portion and the up-sampling portion includes multiple layers, and the control unit obtains architecture parameters of each layer of the down-sampling portion and the up-sampling portion by sampling layer-by-layer.

Appendix 6. The neural network architecture search system according to appendix 1, wherein each of the down-sampling portion and the up-sampling portion includes multiple layers, the control unit obtains architecture parameters of the first layer of the down-sampling portion and architecture parameters of the first layer of the up-sampling portion by sampling, and architectural parameters of other layers of the down-sampling portion are set to be the same as those of the first layer of the down-sampling portion and architecture parameters of other layers of the up-sampling portion are set to be the same as those of the first layer of the up-sampling portion.

Appendix 7. The neural network architecture search system according to appendix 1, wherein the set of architecture parameters includes any combination of 3x3 convolution, 5x5 convolution, 3x3 deep separable convolution, 5x5 deep separable convolution, 3x3 maximum pooling, 3x3 average pooling, identity transformation, 3x3 deformable convolution, 3x3 deconvolution, 5x5 deconvolution.

Appendix 8. The neural network architecture search system according to appendix 1, wherein the predetermined iteration termination condition includes that an expectation of the reward reaches a predetermined value or the number of times of training reaches a predetermined number of times.

Appendix 9. The neural network architecture search system according to appendix 1, wherein the child neural network architecture obtained at the termination of iteration is used for object detection.

Appendix 10. The neural network architecture search system according to appendix 1, wherein the primary processing portion includes multiple convolutional layers for extracting pixel-level primary visual information.

Appendix 11. The neural network architecture search system according to appendix 1, wherein the control unit includes a recurrent neural network.

Appendix 12. A neural network architecture search method, including:

a search space defining step of defining a search space as a set of architecture parameters describing a neural network architecture, wherein the neural network architecture comprises a fixed primary processing portion, a freely searchable down-sampling portion and a freely searchable up-sampling portion;

a control step of sampling, based on parameters of a control unit, the architecture parameters in the search space to generate child neural network architectures;

a training step of training the generated child neural network architectures using sample images to calculate losses of the generated child neural network architectures; and

a reward feedback step of evaluating a reward of the control unit based on the losses of the generated child neural network architectures, and adjusting the parameters of the control unit to make the reward bigger,

wherein processing in the control step, the training step and the reward feedback step is iteratively performed until a predetermined iteration termination condition is met.

Appendix 13. The neural network architecture search method according to appendix 12, wherein in the search space defining step, the search space is defined for object detection.

Appendix 14. The neural network architecture search method according to appendix 13, wherein
the losses include multiple losses related to the object detection, and the multiple losses include an object distribution loss, an object offset loss, and an object size loss, and
in the reward feedback step, the parameters of the control unit are adjusted based on at least one of the object distribution loss, the object offset loss, and the object size loss.

Appendix 15. The neural network architecture search method according to appendix 13, wherein
the losses include multiple losses related to the object detection, and the multiple losses include an object distribution loss, an object offset loss, and an object size loss, and
in the reward feedback step, the parameters of the control unit are adjusted based on the object distribution loss, the object offset loss, and the object size loss, wherein each of the object distribution loss, the object offset loss, and the object size loss is related to output features of the child neural network architectures.

Appendix 16. The neural network architecture search method according to appendix 12, wherein each of the down-sampling portion and the up-sampling portion includes multiple layers, and in the control step, architecture parameters of each layer of the down-sampling portion and the up-sampling portion are obtained by sampling layer-by-layer.

Appendix 17. The neural network architecture search method according to appendix 12, wherein each of the down-sampling portion and the up-sampling portion includes multiple layers, and in the control step, architecture parameters of the first layer of the down-sampling portion and architecture parameters of the first layer of the up-sampling portion are obtained by sampling, and architectural parameters of other layers of the down-sampling portion are set to be the same as those of the first layer of the down-sampling portion and architecture parameters of other layers of the up-sampling portion are set to be the same as those of the first layer of the up-sampling portion.

Appendix 18. The neural network architecture search method according to appendix 12, wherein the set of architecture parameters includes any combination of 3x3 convolution, 5x5 convolution, 3x3 deep separable convolution, 5x5 deep separable convolution, 3x3 maximum pooling, 3x3 average pooling, identity transformation, 3x3 deformable convolution, 3x3 deconvolution, and 5x5 deconvolution.

Appendix 19. The neural network architecture search method according to appendix 12, wherein the primary processing portion includes multiple convolutional layers configured to extract pixel-level primary visual information.

Appendix 20. A computer readable recording medium having a program recorded thereon, and the program causes the computer to perform the following steps:

a search space defining step of defining a search space as a set of architecture parameters describing a neural network architecture, wherein the neural network architecture comprises a fixed primary processing portion, a freely searchable down-sampling portion and a freely searchable up-sampling portion;

a control step of sampling, based on parameters of a control unit, the architecture parameters in the search space to generate child neural network architectures;

a training step of training the generated child neural network architectures using sample images to calculate losses of the generated child neural network architectures; and

a reward feedback step of evaluating a reward of the control unit based on the losses of the generated child neural network architectures, and adjusting the parameters of the control unit to make the reward bigger,

wherein processing in the control step, the training step and the reward feedback step is iteratively performed until a predetermined iteration termination condition is met.

**Claims**

1. A neural network architecture search system, comprising:

   a search space defining unit configured to define a search space as a set of architecture parameters describing a neural network architecture, wherein the neural network architecture comprises a fixed primary processing portion, a freely searchable down-sampling portion and a freely searchable up-sampling portion;
   a control unit configured to sample, based on parameters of the control unit, the architecture parameters in the search space to generate child neural network architectures;
   a training unit configured to train the generated child neural network architectures using sample images to calculate losses of the generated child neural network architectures; and
   a reward feedback unit configured to: evaluate a reward of the control unit based on the losses of the generated child neural network architectures, and adjust the parameters of the control unit to make the reward bigger,
   wherein processing in the control unit, the training unit and the reward feedback unit is iteratively performed until a predetermined iteration termination condition is met.

2. The neural network architecture search system according to claim 1, wherein the search space defining unit is configured to define the search space for object detection.

3. The neural network architecture search system according to claim 2, wherein
   the losses comprise a plurality of losses related to the object detection, and the plurality of losses comprise an object distribution loss, an object offset loss, and an object size loss, and
   the reward feedback unit is configured to adjust the parameters of the control unit based on at least one of the object distribution loss, the object offset loss, and the object size loss.

4. The neural network architecture search system according to claim 2, wherein
   the losses comprise a plurality of losses related to the object detection, and the plurality of losses comprise an object distribution loss, an object offset loss, and an object size loss, and
   the reward feedback unit is configured to adjust the parameters of the control unit based on the object distribution loss, the object offset loss, and the object size loss, wherein each of the object distribution loss, the object offset loss, and the object size loss is related to output features of the child neural network architectures.

5. The neural network architecture search system according to claim 1, wherein each of the down-sampling portion and the up-sampling portion comprises a plurality of layers, and the control unit obtains architecture parameters of each layer of the down-sampling portion and the up-sampling portion by sampling layer-by-layer.

6. The neural network architecture search system according to claim 1, wherein each of the down-sampling portion and the up-sampling portion comprises a plurality of layers, the control unit obtains architecture parameters of the first layer of the down-sampling portion and architecture parameters of the first layer of the up-sampling portion by sampling, and architectural parameters of other layers of the down-sampling portion are set to be the same as those of the first layer of the down-sampling portion and architecture parameters of other layers of the up-sampling portion are set to be the same as those of the first layer of the up-sampling portion.

7. The neural network architecture search system according to claim 1, wherein the set of architecture parameters comprises any combination of 3x3 convolution, 5x5 convolution, 3x3 deep separable convolution, 5x5 deep separable convolution, 3x3 maximum pooling, 3x3 average pooling, identity transformation, 3x3 deformable convolution, 3x3 deconvolution, and 5x5 deconvolution.

8. The neural network architecture search system according to claim 1, wherein the predetermined iteration termination condition includes that an expectation of the reward reaches a predetermined value or the number of times of training reaches a predetermined number of times.

9. The neural network architecture search system according to claim 1, wherein the child neural network architecture obtained at the termination of iteration is used for object detection.

10. The neural network architecture search system according to claim 1, wherein the primary processing portion comprises a plurality of convolutional layers for extracting pixel-level primary visual information.

11. The neural network architecture search system according to claim 1, wherein the control unit includes a recurrent neural network.

12. A neural network architecture search method, comprising:

a search space defining step of defining a search space as a set of architecture parameters describing a neural network architecture, wherein the neural network architecture comprises a fixed primary processing portion, a freely searchable down-sampling portion and a freely searchable up-sampling portion;
a control step of sampling, based on parameters of a control unit, the architecture parameters in the search space to generate child neural network architectures;
a training step of training the generated child neural network architectures using sample images to calculate losses of the generated child neural network architectures; and
a reward feedback step of evaluating a reward of the control unit based on the losses of the generated child neural network architectures, and adjusting the parameters of the control unit to make the reward bigger,
wherein processing in the control step, the training step and the reward feedback step is iteratively performed until a predetermined iteration termination condition is met.

13. The neural network architecture search method according to claim 12, wherein in the search space defining step, the search space is defined for object detection.

14. The neural network architecture search method according to claim 13, wherein
the losses include multiple losses related to the object detection, and the multiple losses include an object distribution loss, an object offset loss, and an object size loss, and
in the reward feedback step, the parameters of the control unit are adjusted based on at least one of the object distribution loss, the object offset loss, and the object size loss.

15. A computer readable recording medium having a program recorded thereon, and the program causes the computer to perform the following steps:

a search space defining step of defining a search space as a set of architecture parameters describing a neural network architecture, wherein the neural network architecture comprises a fixed primary processing portion, a freely searchable down-sampling portion and a freely searchable up-sampling portion;
a control step of sampling, based on parameters of a control unit, the architecture parameters in the search space to generate child neural network architectures;
a training step of training the generated child neural network architectures using sample images to calculate losses of the generated child neural network architectures; and
a reward feedback step of evaluating a reward of the control unit based on the losses of the generated child neural network architectures, and adjusting the parameters of the control unit to make the reward bigger,
wherein processing in the control step, the training step and the reward feedback step is iteratively performed until a predetermined iteration termination condition is met.

**100**

Search space defining
unit 102

Control unit 104

Training unit 106

Reward feedback unit
108

Figure 1

Sample image

Primary processing portion

Primary feature map

Down-sampling portion

Advanced feature map

Up-sampling portion

Restored feature map

Figure 2

layer index= 0

→ Ft[0]

layer index= 1

→ Ft[1]

layer index= 2

→ Ft[2]

layer to be searched

Figure 3

| 0 | 2 | 0 | 0 | 0 | 1 | 0 | 4 | ... |

Cell 0 layer index

Cell 1 operation index

Figure 4a

Ft[0] Ft[0] Ft[0] Ft[0] Ft[0] Ft[1] Ft[1] Ft[2]

Depthwise 3x3 | Conv 3x3 | Conv 5x5 | Max pool | Depthwise 3x3 | Depthwise 5x5 | Depthwise 3x3 | Depthwise 5x5

Cell 0 | Cell 1

Output

Figure 4b

Figure 5

**600**

| The search space as a set of architectural parameters describing the neural network architecture is defined, the neural network architecture includes a fixed primary processing portion, a freely searchable down-sampling portion and a freely searchable up-sampling portion | S602 |

| Based on the parameters of the control unit, the architecture parameters in the search space are sampled to generate child neural network architectures | S604 |

| The generated child neural network architectures are trained using sample images to calculate losses of the generated child neural network architectures | S606 |

| A reward of the control unit is evaluated based on the losses of the generated child neural network architectures, and the parameters of the control unit are adjusted to make the reward larger | S608 |

Figure 6

...

Figure 7

Europäisches
Patentamt

European
Patent Office

Office européen
des brevets

# EUROPEAN SEARCH REPORT

Application Number

EP 20 21 6889

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHEN GAO ET AL: "AdversarialNAS: Adversarial Neural Architecture Search for GANs", ARXIV.ORG, CORNELL UNIVERSITY LIBRARY, 201 OLIN LIBRARY CORNELL UNIVERSITY ITHACA, NY 14853, 4 December 2019 (2019-12-04), XP081545124, | 1,2, 5-13,15 | INV. G06N3/04 G06N3/08 G06K9/00 G06K9/62 |
| Y | * sections 2.2, 3.1, 3.3 and 4.1 * * figure 1 * ----- | 3,4,14 | |
| Y | KEMAL OKSUZ ET AL: "Imbalance Problems in Object Detection: A Review", ARXIV.ORG, CORNELL UNIVERSITY LIBRARY, 201 OLIN LIBRARY CORNELL UNIVERSITY ITHACA, NY 14853, 31 August 2019 (2019-08-31), XP081472703, * sections 6.2 and 9.2.4 * ----- | 3,4,14 | |
| A | MARTIN WISTUBA ET AL: "A Survey on Neural Architecture Search", ARXIV.ORG, CORNELL UNIVERSITY LIBRARY, 201 OLIN LIBRARY CORNELL UNIVERSITY ITHACA, NY 14853, 4 May 2019 (2019-05-04), XP081370836, * the whole document * ----- | 1-15 | |

TECHNICAL FIELDS
SEARCHED (IPC)

G06K
G06N

The present search report has been drawn up for all claims

| Place of search | Date of completion of the search | Examiner |
|---|---|---|
| Munich | 26 May 2021 | Regidor Arenales, R |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)